# EUROPÄISCHE PATENTSCHRIFT

(11) **EP 0 919 440 B1**
(45) Veröffentlichungstag und Bekanntmachung des Hinweises auf die Patenterteilung: **30.01.2002**
(21) Anmeldenummer: 98121664.1
(22) Anmeldetag: 13.11.1998
(51) Int. Cl.: B60R 21/13, B60R 21/02

(54) **Ausfahrbarer Überrollbügel für Kraftfahrzeuge**
Raisable roll bar for vehicles
Arceau de sécurité déployable pour véhicules

(30) Priorität: 27.11.1997 DE 19752484
(43) Veröffentlichungstag der Anmeldung: 02.06.1999
(73) Patentinhaber: ISE Innomotive Systems Europe GmbH, 51702 Bergneustadt (DE)
(72) Erfinder: Nass, Michael, 51702 Bergneustadt (DE); Schulte, Manfred, 57489 Drolshagen (DE); Nowack, Reinhard, 57489 Drolshagen (DE)
(74) Vertreter: Fuchs Mehler Weiss & Fritzsche

(56) Entgegenhaltungen:
- EP-A- 0 623 492
- EP-A- 0 676 317
- DE-A- 4 208 887
- DE-A- 4 444 894
- DE-A- 19 523 790

## Beschreibung

Die Erfindung betrifft einen ausfahrbaren Überrollbügel für Kraftfahrzeuge, bestehend aus einem Überrollkörper mit einem Querbügel und mindestens zwei den Querbügel tragenden Holmen, sowie einer Blechkassette zur Aufnahme des Überrollkörpers, die eine Führungsanordnung für die Holme des Überrollkörpers besitzt, wobei der Querbügel mit einem energieabsorbierenden elastischen Material umkleidet ist.

Derartige ausfahrbare Überrollbügel finden bei Cabrio-Fahrzeugen Verwendung z.B. DE 195 23 790 A1, bei denen aus optischen Gründen auf einen starren, d.h. fest eingebauten Überrollbügel, verzichtet wird.

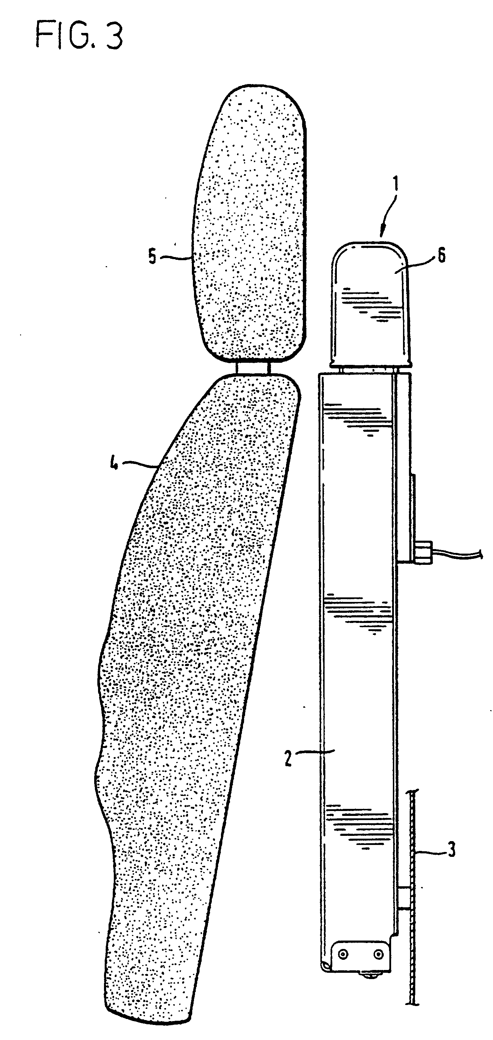

Die Fig. 3 zeigt die bekannte Anordnung des Überrollbügels im Fahrzeug. Der Überrollbügel 1 ist mit einer Blechkassette 2, die sein Außengehäuse bildet, beispielsweise an der Hinterwand 3 des Fahrzeuges, eines Cabriolets, befestigt. Er befindet sich unmittelbar hinter der Rückenlehne 4 mit einer Kopfstütze 5 der Fahrzeugsitze. Die Blechkassette 2 schließt nach oben etwa bündig mit der Rückenlehne 4 ab. In Höhe der zugehörigen Kopfstütze 5 befindet sich im eingefahrenen Zustand der mit einer Bügelabdeckung 6 aus hartem Kunststoff versehene Querbügel des Überrollbügels, über den das Fahrzeug im Überschlagsfall abrollt. Dieser Querbügel bildet zusammen mit mindestens einem rohrförmigen Holm den Bügelkörper, der mit seinem Holm in einem in dem oberen Teil der Blechkassette 2 befestigten Führungsblock in Verbindung mit am Boden der Kassette befestigten Standrohren ein- und ausfahrbar gerührt ist.

Im Überrollfall wird der Bügelkörper, veranlaßt durch einen entsprechenden Sensor und Antrieb, nach oben ausgefahren. In der ausgefahrenen Stellung befindet sich dabei der Querbügel deutlich oberhalb der Kopfstütze und schützt somit die Köpfe der angeschnallten Fahrzeuginsassen bei einem Überschlag.

Überrollbügel der vorgenannten Art sind in manigfaltigen Ausführungsformen hinsichtlich der konstruktiven Gestaltung der Kassettte und der Bügelkörper und des im Überrollfall auslösenden sowie den Bügelkörper ausfahrenden Antriebssystem bekanntgeworden. Beispielhaft sei auf die DE 43 42 401 A1 sowie die DE 195 23 790 A1 hingewiesen, die Antriebe mittels eines Gasgenerators und eines Kolben-Zylindersystems sowie mittels einer Druckfeder zeigen, in Verbindung mit einem pyrotechnischen Zündsatz oder einem Crashmagnet mit Verriegelungshebel als Auslösesystem für den Antrieb.

Im Überrollfall können Unfallsituationen auftreten, bei denen der Kopf der PKW-Insassen hart gegen den Bügelkörper bzw. im gegebenen Fall seine harte Kunststoffabdeckung aufprallt, mit entsprechenden Verletzungsfolgen für den Kopf.

Es ist daher auch bekannt, den Querbügel mit einem energieabsorbierenden elastischen Material zu umkleiden, insbesondere zu umschäumen, wie es beispielsweise auch bei einem umschäumten Lenkrad der Fall ist.

Dieses vollständige Umkleiden des Querbügels mit einem energieabsorbierenden elastischen Material birgt keine prinzipiellen Schwierigkeiten und ist mit den üblichen Techniken durchzuführen.

Hinsichtlich der Holme ist jedoch keine derartige vollständige Verkleidung möglich, da die Holme eine Führungsfunktion haben, d.h. mit der Führungsanordnung in der Kassette in Wirkverbindung stehen. Eine vollständige Umkleidung der Holme mit dem energieabsorbierenden elastischen Material wie im Falle des Querbügels würde daher eine Führung praktisch unmöglich machen, die ein hartes Material benötigt.

Der Erfindung liegt die Aufgabe zugrunde, den eingangs bezeichneten ausfahrbaren Überrollbügel so auszubilden, daß auch Kopfverletzungen aufgrund eines Aufpralles auf die Holme vermieden werden.

Die Lösung dieser Aufgabe gelingt ausgehend von dem eingangs bezeichneten Überrollbügel gemäß der Erfindung dadurch, daß zusätzlich die Holme über mindestens einen Teil ihrer Länge eine Umkleidung mit dem energieabsorbierenden, elastischen Material in Verbindung mit eingebetteten Führungsschienen für die Wirkverbindung mit der Führungsanordnung in der Blechkassette aufweisen.

Mit einer derartigen Ausgestaltung der Umkleidung der Holme ist sowohl ihre Führungsfünktion wie auch ein Unfallschutz beim Aufprall von Körperteilen der Cabrio-Insassen gewährleistet, da die Umkleidung mit dem energieabsorbierenden, elastischen Material den größten Teil der Umfangsfläche einnimmt.

Vorzugsweise sind gemäß einer Weiterbildung der Erfindung vier über den Umfang der Umkleidung gleichmäßig verteilte Führungsschienen vorgesehen. Diese vier symmetrisch verteilte Führungsschienen gewährleisten auf vorteilhafte Weise eine sichere Führung und beanspruchen mit großem Vorteil nur einen sehr geringen Teil der Umfangfläche, d.h. mindern praktisch nicht den Aufprallschutz.

Gemäß einer Ausgestaltung der Erfindung sind die Führungsschienen durch ein Kunststoffprofil mit Gleitflächen gebildet. Diese Ausgestaltung ermöglicht mit Vorteil eine sichere Führung der Holme mit geringem Aufwand und mit einfachen Mitteln.

Gemäß einer Weiterbildung der Erfindung besteht das energieabsorbierende, elastische Material der Umkleidung aus einem Kunststoffschaum. Eine derartige Umkleidung ist auf verhältnismäßig einfache Weise mit konventionellen Mitteln durch Umschäumen der zu umkleidenden Holme mit in das Schaumwerkzeug eingelegten Führungsschienen aufzubringen.

Mit besonderem Vorteil ist die Umkleidung für die Holme einstückig mit der Umkleidung des Querbügels. Beide Umkleidungen können dabei geschlossen in nur einem Arbeitsvorgang auf den Teilen des Überrollbügels aufgeschäumt werden.

Weitere ausgestaltende Merkmale und Vorteile der Erfindung ergeben sich anhand der Beschreibung eines in der Zeichnung dargestellten Ausführungsbeispieles.

Es zeigen:
- Fig. 1: in einer schmematischen Schnittdarstellung den erfindungsgemäß ausgebildeten Überrollbügel sowohl im eingefahrenen als auch im ausgefahrenen Zustand,

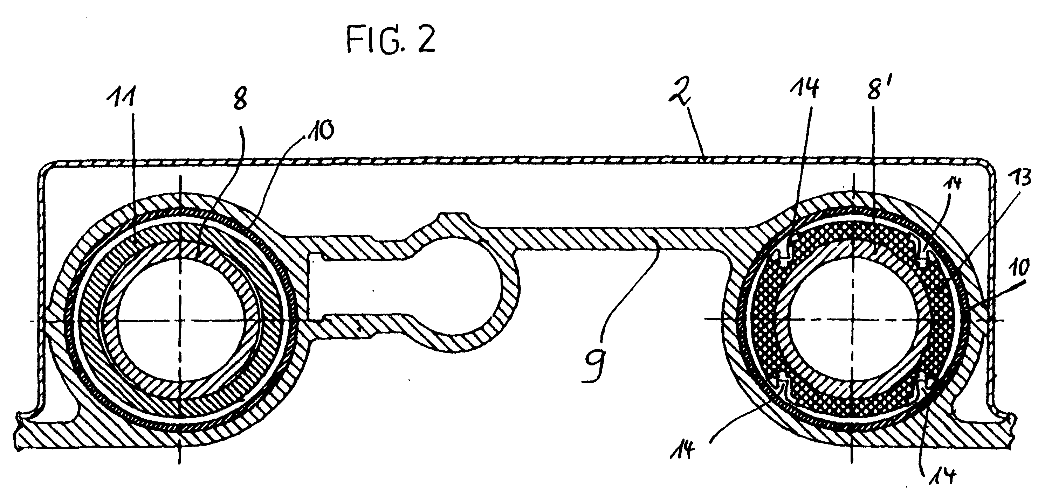

- Fig. 2: einen Schnitt genommen entlang der Linie A-A in Fig. 1, und
- Fig. 3: in einer Prinzipdarstellung die bekannte Anordnung eines ausfahrbaren Überrollbügels in einem Kraftfahrzeug.

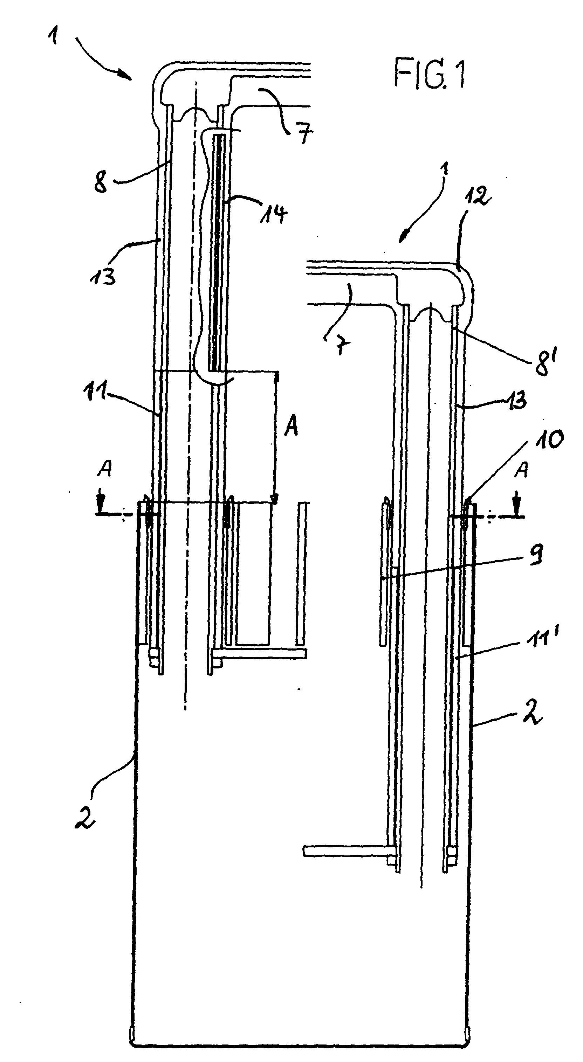

Die Fig. 1 zeigt einen ausfahrbaren Überrollbügel für Kraftfahrzeuge, bestehend aus einem Überrollkörper 1 mit einem Querbügel 7 (auch Traverse genannt) und zwei rohrförmigen Holmen 8, 8', die in Fig. 1 in zwei verschiedenen Zuständen dargestellt sind, nämlich im linken Teil im ausgefahrenen und im rechten Teil im eingefahrenen Zustand des Überrollkörpers. Die rohrförmigen Holme 8, 8', auch Führungsrohre genannt, werden vorzugsweise aus einem Aluminiumstrangpreßprofil gefertigt.

Der Überrollkörper 1 weist ferner eine Blechkassette 2, die vorzugsweise entsprechend der Darstellung in Fig. 3 im Fahrzeug befestigt ist und den Überrollkörper 1 aufnimmt.

In der Blechkassette 2 ist eine Führungsanordnung für die Holme 8, 8' vorgesehen. Diese besteht aus einem Führungsblock 9 mit eingepaßten Führungsbuchsen 10, die vorzugsweise aus einem harten Kunststoff bestehen.

Die Abstützung der Holme 8, 8' ist dabei konstruktiv (nicht dargestellt) so getroffen, daß der Überrollbügel nur mit einem sehr eingeschränkten Hub A zurückfahrbar ist. In diesem Stützhub-Bereich ist über die Holme 8, 8' jeweils ein Distanzrohr 11, 11', vorzugsweise aus hochfestem Kunststoff oder einem Aluminiumstrangpreßprofil, gesteckt, damit sich der Überrollbügel bei Belastung im Führungsblock 9 ohne Wegverlust abstützen kann.

Da der Überrollkörper 1 mit seinem Querbügel 7 und zum Teil auch mit den Holmen 8, 8' bei einem Überroll-Crash über die Kopfstützen hinausragt, ist der Querbügel 7 in bekannter Weise mit einer Umkleidung 12 aus energieabsorbierenden, und elastischem Material, vorzugsweise mit einer Kunststoffumschäumung, versehen. Da auch die Holme im Crashfall, wie erwähnt, über die Kopfstützen hinausragen, sind diese ebenfalls, vorzugsweise einstückig mit der Umkleidung 12 des Querbügels 7, mit einer Umkleidung 13 aus energieabsorbierenden, elastischem Material versehen, vorzugsweise aus einem umschäumten Kunststoff. Damit jeweils die Holme im umkleideten Zustand von außen geführt werden können, eine zwingend notwendige Voraussetzung für die Funktion des ausfahrbaren Überrollbügels, sind in der Umkleidung 13 Führungsschienen 14 eingebettet, im Ausführungsbeispiel vier für jeden Holm 8, 8'. Die Anzahl der Holme ist in Fig. 1 nur beispielhaft zu sehen, so könnte prinzipiell auch eine sogenannte Dreipunkt-Lagerung, d.h. es könnten drei Führungsschienen in dem Kunststoffmaterial eingebettet sein. Ist die Anzahl der Führungsschienen größer als vier, so verstärkt sich die Führungsfunktion zum Nachteil des Aufprallschutzes. Die vier in der Fig. 1 dargestellten Führungsschienen bilden daher einen zweckmäßigen Kompromiß.

Besteht die Umkleidung aus einem umschäumten Kunststoff, dann werden zweckmäßig in das Schaumwerkzeug vor dem Umschäumen der Holme 8, 8' und des Querbügels 7 im Bereich der Holme in Streifen abgelängte Kunststoffprofile als Gleitprofile, d.h. Führungsschienen 14, eingebettet und mit eingeschäumt. An diesen eingeschäumten Kunststoff-Gleitprofilen wird der Überrollkörper 1 außen im oberen Bereich mit den Kunststoffbuchsen 10 im Führungsblock 9 sicher ein- und ausfahrbar geführt.

Die Profile besitzen vorzugsweise keine scharfen Kanten, sondern weisen, ausgehend von einem U-Profilartigen Querschnitt, Gleitflächen auf, was zum einen die Führung verbessert und zum anderen eine von den Führungsschienen ausgehende Verletzungsgefahr minimiert.

Die Umkleidung der Holme 8, 8' und des Querbügels 7 mittels eines aufgeschäumten Kunststoffes ist eine bewährte Technologie für einen Aufprallschutz in einem Kraftfahrzeug. Die Umkleidung kann jedoch prinzipiell auch aus einem Kunststoffmaterial mit Wabenstruktur oder aus einem Kunststoffmaterial mit noppenartigen Luftkammern, wie es aus der Verpackungstechnik bekanntgeworden ist, bestehen. Weitere energieabsorbierende, elastische Materialien sind denkbar.

## Patentansprüche

1. Ausfahrbarer Überrollbügel für Kraftfahrzeuge, bestehend aus einem Überrollkörper (1) mit einem Querbügel (7) und mindestens zwei, den Querbügel tragenden Holmen (8, 8'), sowie einer Blechkassette (2) zur Aufnahme des Überrollkörpers, die eine Führungsanordnung (9, 10, 11) für die Holme des Überrollkörpers besitzt, wobei der Querbügel mit einem energieabsorbierenden, und elastischen Material (12) umkleidet ist, **dadurch gekennzeichnet, daß** zusätzlich die Holme (8, 8') über mindestens einen Teil ihrer Länge eine Umkleidung (13) mit dem energieabsorbierenden, elastischen Material versehen sind, und daß zur Führung der Holme (8, 8') im umkleidefen Zustand in der Umkleidung (13) Führungsschienen (14) eingebettet sind, die in Wirkverbindung mit der Führungsanordnung (9, 10, 11) in der Blechkassette (2) stehen.

2. Überrollbügel nach Anspruch 1, daß vier über den Umfang der Umkleidung (13) der Holme (8, 8') gleichmäßig verteilte Führungsschienen (14) vorgesehen sind.

3. Überrollbügel nach Anspruch 1 oder 2, **dadurch gekennzeichnet, daß** die Führungsschienen (14) durch ein Kunststoffprofil mit Gleitflächen gebildet sind.

4. Überrollbügel nach einem der Ansprüche 1 bis 3, **dadurch gekennzeichnet, daß** das energieabsorbierende, elastische Material der Umkleidung (12, 13) des Querbügels (7) und der Holme (8, 8') aus einem Kunststoffschaum besteht.

5. Überrollbügel nach Anspruch 4, **dadurch gekennzeichnet, daß** die Umkleidung (13) für die Holme (8, 8') einstückig mit der Umkleidung (12) des Querbügels (7) ist.

6. Überrollbügel nach einem der Ansprüche 1 bis 5, **dadurch gekennzeichnet, daß** die Führungsanordnung für die Holme (8, 8') einen Führungsblock (9) mit eingepaßten Führungsbuchsen (10) als Gleitlager für die in die Umschäumung (13) der Holme (8, 8') eingebetteten Führungsschienen (14) aufweist.

7. Überrollbügel nach einem der Ansprüche 1 bis 6 mit einem vorgegebenen Stützhub, **dadurch gekennzeichnet, daß** in dem Bereich des Stützhubes auf die Holme (8, 8') Distanzrohre (11, 11') aufgesteckt sind.

## Claims

1. Retractable rollover bar for motor vehicles comprising a rollover body (1) having a transverse bar (7) and at least two crossbeams (8, 8') supporting the transverse bar, and a sheet metal cassette (2) for receiving the rollover body, which has a guide arrangement (9, 10, 11) for the crossbeams of the rollover body, wherein the transverse bar is covered with an energy-absorbing and elastic material (12), **characterised in that** additionally the crossbeams (8, 8') are provided over at least part of their length with a covering (13) having the energy-absorbing, elastic material, and **in that** to guide the crossbeams (8, 8') in the covered state, guide rails (14) are embedded in the covering (13) which cooperate with the guide arrangement (9, 10, 11) in the sheet metal cassette (2).

2. Rollover bar according to claim 1, **characterised in that** four guide rails (14) are provided uniformly distributed over the periphery of the covering (13) of the crossbeams (8, 8').

3. Rollover bar according to claim 1 or 2, **characterised in that** the guide rails (14) are formed by a plastic profile having sliding surfaces.

4. Rollover bar according to one of claims 1 to 3, **characterised in that** the energy-absorbing, elastic material of the covering (12, 13) of the transverse bar (7) and the crossbeams (8, 8') consists of a plastic foam.

5. Rollover bar according to claim 4, **characterised in that** the covering (13) for the crossbeams (8, 8') is integral with the covering (12) of the transverse bar (7).

6. Rollover bar according to one of claims 1 to 5, **characterised in that** the guide arrangement for the crossbeams (8, 8') has a guide block (9) with fitted guide bushes (10) as sliding bearings for the guide rails (14) embedded in the foam covering (13) of the crossbeams (8, 8').

7. Rollover bar according to one of claims 1 to 6 having a preset supporting stroke, **characterised in that** spacer tubes (11, 11') are pushed onto the crossbeams (8, 8') in the region of the supporting stroke.

## Revendications

1. Arceau de sécurité dépliable pour véhicules à moteur, composé d'un corps (1) doté d'un arceau transversal (7) et d'au moins deux montants (8, 8') supportant l'arceau transversal ainsi que d'un coffre en tôle, destiné à recevoir le corps, qui possède des glissières (9, 10, 11) pour les montants du corps, l'arceau transversal étant recouvert d'un matériau élastique absorbant l'énergie (12), **caractérisé en ce que,** en complément, les montants (8, 8') sont dotés, sur au moins une partie de leur longueur, d'un habillage (13) constitué du matériau élastique absorbant l'énergie et **en ce que**, pour guider les montants (8, 8') lorsqu'ils sont habillés, des rails de guidage (14), qui sont reliés activement avec les glissières (9, 10, 11) situées dans le coffre en tôle (2), sont logés dans l'habillage (13).

2. Arceau de sécurité selon revendication 1, **caractérisé en ce que** quatre rails de guidage (14) sont répartis uniformément à la périphérie de l'habillage (13) des montants (8, 8').

3. Arceau de sécurité selon revendication 1 ou 2, **caractérisé en ce que** les rails de guidage (14) sont constitués d'un profilé plastique dotés de plans de glissement.

4. Arceau de sécurité selon l'une des revendications 1 à 3, **caractérisé en ce que** le matériau élastique absorbant l'énergie de l'habillage (12, 13) de l'arceau transversal (7) et des montants (8, 8') est constitué d'une mousse synthétique.

5. Arceau de sécurité selon revendication 4, **caractérisé en ce que** l'habillage (13) des montants (8, 8') est d'un seul tenant avec l'habillage (12) de l'arceau transversal (7).

6. Arceau de sécurité selon l'une des revendications 1 à 5, **caractérisé en ce que** les glissières des montants (8, 8') présentent un bloc de guidage (9) avec douille de guidage (10) à l'intérieur servant de palier lisse pour les rails de guidage (14) logés dans la mousse (13) entourant les montants (8, 8').

7. Arceau de sécurité selon l'une des revendications 1 ou 6 avec course d'appui donnée, **caractérisé en ce que** des douilles d'écartement (11, 11') sont placées sur les montants (8, 8') au niveau de la course d'appui.
